(19)

Europäisches
Patentamt

European
Patent Office

Office européen
des brevets

(11) **EP 2 919 032 A1**

(12) **EUROPEAN PATENT APPLICATION**

(43) Date of publication:
16.09.2015 Bulletin 2015/38

(51) Int Cl.:
*G01S 7/38* (2006.01)    *G01S 7/02* (2006.01)
*G06F 7/24* (2006.01)

(21) Application number: 15155208.0

(22) Date of filing: 16.02.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 14.03.2014 GB 201404627

(71) Applicant: Thales Holdings UK Plc
Addlestone, Surrey KT15 2NX (GB)

(72) Inventors:
• **Pont, Anthony**
**Crawley, West Sussex RH10 9HA (GB)**
• **Carnell, Roy**
**Crawley, West Sussex RH10 9HA (GB)**

(74) Representative: **Williams, Michael David**
**Marks & Clerk LLP**
**1 New York Street**
**Manchester M1 4HD (GB)**

(54) **Low latency sort**

(57)    A method for processing electrical signals. The method comprises receiving a plurality of electrical signals, each electrical signal having an associated magnitude value, generating from the magnitude values a set of peak values, the set of peak values indicating peaks in the plurality of electronic signals, generating from the peak values a plurality of first indexes, the first indexes indexing respective ones of the peak values, generating from the peak values at least one second index, the at least one second index indexing at least one of the first indexes, selecting from the plurality of first indexes at least one third index based on the at least on second index, and selecting at least one of the electrical signals based on the at least one third index.

Fig. 2a

**Description**

FIELD

This application is concerned with methods and systems for sorting values and has particular, though not exclusive application for use in sorting threat indications received from, for example, an electronic counter measure (ECM) system.

BACKGROUND

ECM (electronic counter measure) systems are used to deceive detection apparatus (such as radar, sonar, lidar detection apparatus) so as to avoid detection of a craft (such as a ship or aircraft). In order to effectively respond to detected threats, the latency for processing threats must be minimized. For off-board ECM systems (i.e. ECM systems not mounted to the craft avoiding detection), countering processing latency requires moving the ECM system closer to the threat, which may be undesirable, impractical or impossible. Methods to reduce processing latency are therefore required.

One area of threat processing where latency is significant is the prioritisation of detected threats. An ECM system may require threats to be addressed in an order based on an amplitude of the detection signal corresponding to that threat. Generally, this requires detected threats be sorted in order of amplitude with a number of the larger amplitude threats being passed to a further stage for additional processing. It will be understood that methods for more quickly prioritising threats are therefore sought.

SUMMARY

According to a first aspect of the invention, there is provided a method for processing electrical signals, comprising, at a receiver: receiving a plurality of electrical signals, each electrical signal having an associated magnitude value. The method further comprises, at a processor: generating from the magnitude values a set of peak values, the set of peak values indicating peaks in the plurality of electronic signals; generating from the peak values a plurality of first indexes, the first indexes indexing respective ones of the peak values; generating from the peak values at least one second index, the at least one second index indexing at least one of the first indexes; selecting from the plurality of first indexes at least one third index based on the at least on second index; and selecting at least one of the electrical signals based on the at least one third index.

Thereby, an improved method of processing electrical signals is provided by which largest ones of the electrical signals may be more quickly determined.

Receiving a plurality of electrical signals may comprise receiving N electrical signals and the method may further comprise processing each of the N electrical signals to generate a first set of N magnitude values, each of said N magnitude values having M bits.

Generating the set of peak values may comprise processing the first set of N magnitude values to generate a corresponding set of N peak values each of the N peak values having M bits, wherein each of the N peak values corresponding to a non-peak value in the first set of N magnitude values has a value of zero.

Processing the first set of peak values to generate the plurality of first indexes may comprise transposing a first N by M matrix based on the set of peak values to generate a transposed matrix of M values each of the M values having N bits.

The method may further comprise generating the first matrix by generating an N by M matrix in which for each row only a bit corresponding to a most significant set bit of a corresponding peak value is set. Generating the first matrix may comprise providing said first set of peak values to a first priority encoder module.

Processing the set of peak values to generate the plurality of first indexes may comprise generating at least one bit mask for each of the M values in the transposed matrix. Generating at least one bit mask for a particular one of the M values may comprise generating a first bit mask of N bits having at most a single set bit at the position of the most significant set bit of the particular one of the M values.

Generating at least one bit mask for a particular one of the M values may comprise generating a plurality of bit masks for the particular one of the M values, each respective one of the plurality of bit masks comprising at most a single set bit at a position of a most significant set bit not set in an existing one of the plurality of bit masks associated with the particular one of the M values.

Generating a plurality of bit masks may comprise generating four bit masks, each respective bit mask having at most a single set bit at positions of the four most significant set bits of the particular one of the M values respectively.

Generating at least one bit mask for a particular one of the M values may comprise providing the particular one of the M values to a second priority encoder module to generate a first bit mask.

Generating a plurality of bit masks may further comprise subtracting the first bit mask from the particular one of the M values to generate a first intermediate value and providing the first intermediate value to a third priority encoder module to generate a second bit mask.

Processing the peak values to generate the plurality of first indexes may comprise generating a first index for each of the bit masks having a set bit, wherein for each bit mask having a set bit a corresponding first index comprises position bits that indicate a position of the set bit within the bit mask.

Processing the peak values to generate the at least one second index may comprise generating a valid word, the valid word comprising a respective bit for each of the bit masks, wherein for each of the bit masks a corresponding bit of the valid word is set if the bit mask comprises a set bit and is not set if the bit mask does not comprise a set bit.

Processing the plurality of peak values to generate at least one second index may comprise processing the valid word to generate the at least one second index, the second index comprising at most a single set bit at a position corresponding to a position of a most significant set bit in the valid word.

Processing the peak values to generate at least one second index may comprise generating a plurality of second indexes, each second index comprising at most a single set bit at a position of a most significant set bit of the valid word that is not set in another of the second indexes.

Processing the plurality of peak values to generate at least one second index may comprise generating four second indexes, each second index comprising at most a single set bit at a position corresponding to a position of one of four most significant set bits of the valid word respectively.

Selecting from the plurality of first indexes at least one third index based on the at least one second index may comprise providing the plurality of first indexes as inputs to a first multiplexer and selecting at least one of the first indexes based on the at least one second index.

Selecting at least one of the electrical signals may comprise providing the corresponding magnitude values as inputs to a second multiplexer and selecting at least one of the electrical signals based on the at least one third index.

The method may further comprise receiving the set of electrical signals from an ECM apparatus.

The method may further comprise providing the selected at least one electrical signal, or an indication of the selected at least one electrical signal, to an ECM apparatus. The method may further comprise, at the ECM apparatus: selecting a target based upon the selected at least one electrical signal; and targeting at least one detection counter-measure at the target.

The received electrical signals may comprise sixty-four electrical signals and each associated magnitude value may comprise a nineteen-bit value.

Selecting at least one of the received electrical signals may comprise selecting four of the received electrical signals.

According to a second aspect of the invention, there is provided a method for selecting a subset of values from a first set of values, comprising: receiving a set of peak values, the peak values comprising peaks in the first set of values; processing the set of peak values to generate a plurality of first indexes, the first indexes indexing respective ones of the peak values; processing the set of peak values to generate at least one second index, the at least one second index indexing at least one of the first indexes; selecting from the plurality of first indexes at least one third index based on the at least one second index; and selecting from the first set of values the subset of values based on the at least one third index.

The set of peak values may comprise N values each of the N values having M bits. Processing the first set of peak values to generate the plurality of first indexes may comprise transposing a first N by M matrix based on the set of peak values to generate a transposed matrix of M values each of the M values having N bits.

Processing the set of peak values to generate the plurality of first indexes may comprise generating a further N by M matrix in which only the most significant bit of each value of the peak values is set. The first matrix may be the further matrix.

Processing the set of peak values to generate the plurality of first indexes may comprise generating at least one bit mask for each of the M values in the transposed matrix.

Generating at least one bit mask for a particular one of the M values may comprise generating a first bit mask of N bits having at most a single set bit at the position of the most significant set bit of the particular one of the M values.

Generating at least one bit mask for a particular one of the M values may comprise generating a plurality of bit masks for the particular one of the M values, each respective one of the plurality of bit masks comprising at most a single set bit at a position of a most significant set bit not set in an existing one of the plurality of bit masks associated with the particular one of the M values.

Generating a plurality of bit masks may comprise generating four bit masks, each respective bit mask having at most a single set bit at positions of the four most significant set bits of the particular one of the M values respectively.

Processing the peak values to generate the plurality of first indexes comprises generating a first index for each of the bit masks having a set bit, wherein for each bit mask having a set bit a corresponding first index comprises position bits indicating a position of the set bit within the bit mask.

Processing the peak values to generate the at least one second index comprises generating a valid word comprising a respective bit for each of the bit masks. For each of the bit masks a corresponding bit of the valid word is set if the bit mask comprises a set bit and is not set if the bit mask does not comprise a set bit.

Processing the plurality of peak values to generate at least one second index may comprise processing the valid word to generate the at least one second index, the second index comprising at most a single set bit at a position of a most significant set bit in the valid word.

Processing the peak values to generate at least one second index may comprise generating a plurality of second indexes, each second index comprising at most a single set bit at a position of a most significant set bit of the valid word that is not set in another of the second indexes.

Processing the peak values to generate at least one second index may comprise generating four second indexes, each second index comprising at most a single set bit at positions of the four most significant set bits of the valid word respectively.

Selecting from the plurality of first indexes at least one third index based on the at least one second index may comprise providing the plurality of first indexes as inputs to a first multiplexer and selecting at least one of the first indexes based on the at least one second index.

Selecting the subset of values may comprise providing the set of values as inputs to a second multiplexer and selecting the subset of values based on the at least one third index.

The method may further comprise receiving the first set of values from an ECM apparatus.

The method ma further comprise providing the subset to an ECM apparatus.

The method may further comprise, at the ECM apparatus: selecting a target based upon the subset; and targeting at least one detection counter-measure at the target.

Receiving a set of peak values may comprise processing the first set of values to generated the peak values.

The first set of values may comprises sixty-four nineteen-bit values.

Selecting a subset of values may comprise selecting any number of values, and may comprise selecting a single value. In one embodiment, the selected subset may comprise four values.

According to a third aspect of the invention, there is provided an FPGA programmed to carry out a method according to the second aspect.

According to a fourth aspect of the invention, there is provided an apparatus for processing electrical signals, comprising: a receiver for receiving a plurality of electrical signals, each electrical signal having an associated magnitude value; and a processor arranged to: generate from the magnitude values a set of peak values, the set of peak values indicating peaks in the plurality of electronic signals; generate from the peak values a plurality of first indexes, the first indexes indexing respective ones of the peak values; generate from the peak values at least one second index, the at least one second index indexing at least one of the first indexes; select from the plurality of first indexes at least one third index based on the at least on second index; and select at least one of the electrical signals based on the at least one third index.

The apparatus may comprise a memory storing processor readable instructions executable by the processor to cause the processor to carry out the generating and selecting steps.

According to a fifth aspect of the invention, there is provided an electronic counter measures (ECM) system, comprising: a first processor arranged to generate a first set of threat indication values and to pass the first set of threat indication values to a second processor, wherein the second processor is arranged to: receive a set of peak values, the peak values comprising peaks in the first set of threat indication values; process the set of peak values to generate a plurality of first indexes, the first indexes indexing respective ones of the peak values; process the set of peak values to generate at least one second index, the at least one second index indexing at least one of the first indexes; select from the plurality of first indexes at least one third index based on the at least one second index; and select from the first set of values the subset of values based on the at least one third index.

The second processor may comprise an FPGA.

It will be appreciated that aspects can be implemented in any convenient way including by way of suitable hardware and/or software. For example, devices arranged to implement embodiments may be created using appropriate hardware components. Alternatively, a programmable device may be programmed to implement embodiments. The invention therefore also provides suitable computer programs for implementing aspects. Such computer programs can be carried on suitable carrier media including tangible carrier media (e.g. hard disks, CD ROMs and so on) and intangible carrier media such as communications signals.

One or more aspects, features or embodiments described herein, may be combined with any one or more other aspects, features or embodiments described herein.

DRAWINGS

Figure 1 is a flowchart showing processing carried out in a described embodiment;

Figures 2a and 2b are schematic illustrations of logical components of a described embodiment; and

Figure 3 is a flowchart showing processing carried out by logical components of a described embodiment.

DESCRIPTION

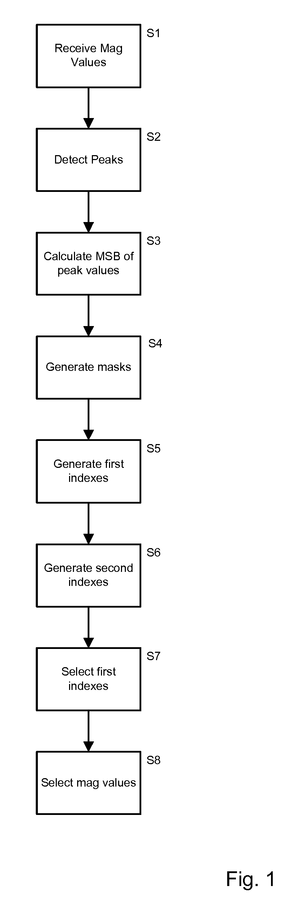

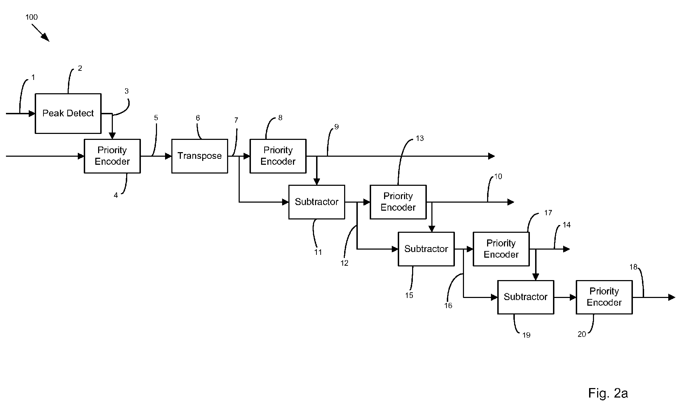

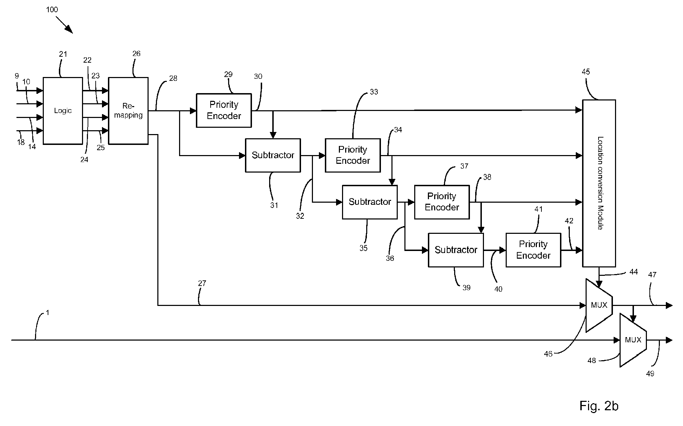

Embodiments described herein are generally concerned with methods and systems for determining which values in an input set are among the largest values in that input set. With reference to the flowchart of Figure 1, together with the schematic diagram in Figures 2a, 2b, processing to determine four values from sixty-four magnitude values is described. In particular, the processing of Figure 1 processes an input set of sixty-four magnitude values to provide an output of four magnitude values, those four magnitude values being, approximately, the largest four values in the set of magnitude values. That is, the four values output by the processing of Figure 1 may be the four absolute largest magnitude values in the input set, but will be among the largest values in the input set. The terms "approximately four largest" and "four of the largest" should be taken to be equivalent in the following description.

Figures 2a, 2b schematically depict a system 100 comprising a plurality of logical components. It will be readily apparent to the skilled person that the components of the system 100 may be implemented in hardware or in software or any combination of the two. When an least a part of the system 100 is implemented in software, the system 100 may require fewer discrete operations to perform the processing of Figure 1 than when implemented entirely in hardware.

At step S1, a first set 1 of sixty-four nineteen-bit unsigned binary values is received by the system 100, and each of the sixty-four values is stored in a respective register (not shown). In the presently described embodiment, it is to be taken that each of the unsigned binary values in the first set 1 represents a respective amplitude of a signal generated by an Electronic Counter Measures (ECM) system in response to detection of a threat, where the amplitude can be considered to represent an importance level of the detected threat. In determining four of the largest values, the threats to which these values correspond may be prioritised for action by the ECM system. It will be appreciated, however, that the described embodiment is not so limited and that the plurality of unsigned binary values may be any unsigned binary values. Further, as described in more detail below, the size and depth of the data set is not limited to the example embodiment described, but may be of any size and depth.

The values generated by the ECM system may need to be processed prior to step S1 to provide the unsigned binary values. For example, in one embodiment, a detection signal generated by an ECM system may be processed by a sixty-four point Fast Fourier Transform (FFT) providing a real (I) and imaginary (Q) output. The first set of unsigned binary values 1 may be provided by taking the square root of a summation of squares of the real and imaginary outputs to provide the amplitude values described above. In other embodiments, the set of values 1 may be provided only by the summation of the squares of the real and imaginary outputs of the FFT, however this increases the approximation error by a factor of two.

At step S2 the first set of values 1 is processed by a peak detection module 2 to provide a second set sixty-four nineteen bit values 3 in which the non-peak values of the first set of values 1 are zeroed. It will be understood that the peak detection may be performed in any appropriate way. In general, peak detection of sixty-four nineteen-bit values can be performed within a single clock cycle. In general terms, the peak detection module 2 is arranged to process each of the magnitude values within the first set of values 1 in series, determining for each value whether the magnitude is larger than both of its neighbouring values (or its single neighbouring value for the first and final values in the first set of values 1). The peak detection module 2 therefore detects local (rather than global) peaks within the first set of values 1.

As a specific example, the first set of values 1 may be processed using the logical operation (1)

$$(n > n + 1) \ AND \ (n > n - 1) \qquad\qquad (1)$$

where $n$ is an index into the first set of values 1 and if (1) equates to TRUE for a particular index $n$ the value at index $n$ is a peak value. The operation (1) requires one-hundred-twenty-six nineteen-bit comparators and sixty-four AND operations in the present example (i.e. to process sixty-four nineteen-bit values). Analysis has shown that this can be achieved in hardware in a single clock cycle. It will of course be appreciated that other methods of peak detection may equally be used. For '$n$=0' (i.e. the first value within the set 1), $n-1$ is assigned a value of '0'.

The output from the processing of step S2 is a second set of sixty-four nineteen-bit values 3 comprising the peak values of the first set of values 1 in the same position as in the first set of values 1. Each of the other (non-peak) values is zeroed. By way of illustration, Table 1 below shows an initial set of sixteen, eight-bit values to represent the first set of values 1 before processing by the peak processing module 2. It will be appreciated that while the described embodiment relates to an example in which sixty-four nineteen-bit words are processed, while Table 1 only shows sixteen eight-bit words (for clarity and ease of explanation), the principles and techniques described are the same.

Each row of the Table 1 provides a binary magnitude value. For ease of reference, a first column of Table 1 provides in decimal the magnitude of each row, and is therefore not part of the value encoded in that row.. It can be seen from Table 1 that the local peak values are '255', '240', '185', '97' and '201'. It can be seen that a final value within the set 1 is identified as a peak value if it is greater than the penultimate value. Similarly, an initial value within the set 1 will be identified as a peak value if it is higher than a second value.

Table 1

| Mag | $2^7$ | $2^6$ | $2^5$ | $2^4$ | $2^3$ | $2^2$ | $2^1$ | $2^0$ |
|---|---|---|---|---|---|---|---|---|
| 2 | 0 | 0 | 0 | 0 | 0 | 0 | 1 | 0 |
| 5 | 0 | 0 | 0 | 0 | 0 | 1 | 0 | 1 |
| 90 | 0 | 1 | 0 | 1 | 1 | 0 | 1 | 0 |
| 120 | 0 | 1 | 1 | 1 | 1 | 0 | 0 | 0 |
| 255 | 1 | 1 | 1 | 1 | 1 | 1 | 1 | 1 |
| 86 | 0 | 1 | 0 | 1 | 0 | 1 | 1 | 0 |
| 240 | 1 | 1 | 1 | 1 | 0 | 0 | 0 | 0 |
| 54 | 0 | 0 | 1 | 1 | 0 | 1 | 1 | 0 |
| 185 | 1 | 0 | 1 | 1 | 1 | 0 | 0 | 1 |
| 146 | 1 | 0 | 0 | 1 | 0 | 0 | 1 | 0 |
| 89 | 0 | 1 | 0 | 1 | 1 | 0 | 0 | 1 |
| 97 | 0 | 1 | 1 | 0 | 0 | 0 | 0 | 1 |
| 64 | 0 | 1 | 0 | 0 | 0 | 0 | 0 | 0 |
| 67 | 0 | 1 | 0 | 0 | 0 | 0 | 1 | 1 |
| 87 | 0 | 1 | 0 | 1 | 0 | 1 | 1 | 1 |
| 201 | 1 | 1 | 0 | 0 | 1 | 0 | 0 | 1 |

Table 2 below shows a corresponding set of sixteen, eight-bit words representing the second set of values 3 produced by the peak detection module 2 at step S2. In Table 2, only the peak values are retained, with other (non-peak) values set to '0'. The original magnitude values shown in Table 1 are retained in Table 2 for ease of reference.

Table 2

| Original Mag | $2^7$ | $2^6$ | $2^5$ | $2^4$ | $2^3$ | $2^2$ | $2^1$ | $2^0$ |
|---|---|---|---|---|---|---|---|---|
| 2 | 0 | 0 | 0 | 0 | 0 | 0 | 0 | 0 |
| 5 | 0 | 0 | 0 | 0 | 0 | 0 | 0 | 0 |
| 90 | 0 | 0 | 0 | 0 | 0 | 0 | 0 | 0 |
| 120 | 0 | 0 | 0 | 0 | 0 | 0 | 0 | 0 |
| 255 | 1 | 1 | 1 | 1 | 1 | 1 | 1 | 1 |
| 86 | 0 | 0 | 0 | 0 | 0 | 0 | 0 | 0 |
| 240 | 1 | 1 | 1 | 1 | 0 | 0 | 0 | 0 |
| 54 | 0 | 0 | 0 | 0 | 0 | 0 | 0 | 0 |
| 185 | 1 | 0 | 1 | 1 | 1 | 0 | 0 | 1 |
| 146 | 0 | 0 | 0 | 0 | 0 | 0 | 0 | 0 |
| 89 | 0 | 0 | 0 | 0 | 0 | 0 | 0 | 0 |

(continued)

| Original Mag | $2^7$ | $2^6$ | $2^5$ | $2^4$ | $2^3$ | $2^2$ | $2^1$ | $2^0$ |
|---|---|---|---|---|---|---|---|---|
| 97 | 0 | 1 | 1 | 0 | 0 | 0 | 0 | 1 |
| 64 | 0 | 0 | 0 | 0 | 0 | 0 | 0 | 0 |
| 67 | 0 | 0 | 0 | 0 | 0 | 0 | 0 | 0 |
| 87 | 0 | 0 | 0 | 0 | 0 | 0 | 0 | 0 |
| 201 | 1 | 1 | 0 | 0 | 1 | 0 | 0 | 1 |

Processing passes from step S2 to step S3, in which the second set of values 3 is passed to a priority encoder 4 arranged to output a third set of sixty-four nineteen-bit values 5 by retaining only the most significant set bit in each of the values in the second set 3. Each other set bit is set to '0'. Table 3 below illustrates the output of the priority encoder 4 with respect to the values shown in Table 2.

Table 3

| Original Mag | $2^7$ | $2^6$ | $2^5$ | $2^4$ | $2^3$ | $2^2$ | $2^1$ | $2^0$ |
|---|---|---|---|---|---|---|---|---|
| 2 | 0 | 0 | 0 | 0 | 0 | 0 | 0 | 0 |
| 5 | 0 | 0 | 0 | 0 | 0 | 0 | 0 | 0 |
| 90 | 0 | 0 | 0 | 0 | 0 | 0 | 0 | 0 |
| 120 | 0 | 0 | 0 | 0 | 0 | 0 | 0 | 0 |
| 255 | 1 | 0 | 0 | 0 | 0 | 0 | 0 | 0 |
| 86 | 0 | 0 | 0 | 0 | 0 | 0 | 0 | 0 |
| 240 | 1 | 0 | 0 | 0 | 0 | 0 | 0 | 0 |
| 54 | 0 | 0 | 0 | 0 | 0 | 0 | 0 | 0 |
| 185 | 1 | 0 | 0 | 0 | 0 | 0 | 0 | 0 |
| 146 | 0 | 0 | 0 | 0 | 0 | 0 | 0 | 0 |
| 89 | 0 | 0 | 0 | 0 | 0 | 0 | 0 | 0 |
| 97 | 0 | 1 | 0 | 0 | 0 | 0 | 0 | 0 |
| 64 | 0 | 0 | 0 | 0 | 0 | 0 | 0 | 0 |
| 67 | 0 | 0 | 0 | 0 | 0 | 0 | 0 | 0 |
| 87 | 0 | 0 | 0 | 0 | 0 | 0 | 0 | 0 |
| 201 | 1 | 0 | 0 | 0 | 0 | 0 | 0 | 0 |

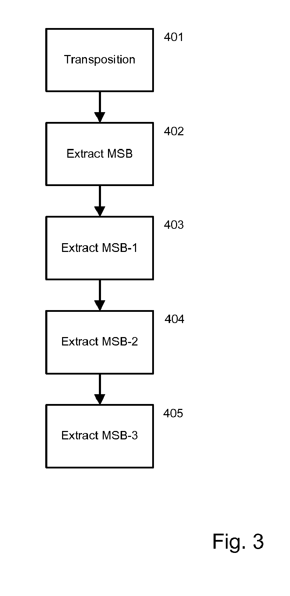

The effect of the priority encoder 4 is to round down each magnitude value in the second set of values 3 to the nearest power of 2, which (approximately) provides an effect of setting the resolution of the sorting operation to 3 dB. That is, magnitude values that represent signals within 3 dB of each other are not distinguished by the sorting operation.
In other embodiments, the third set of values 5 may be produced by more accurately rounding each of the second set of values to the nearest power of two. For example, in the described embodiment, the magnitude '255' in Table 2 is rounded down to '128' in Table 3, whereas accurately rounding to the nearest power of two provide a rounded value of '256'. It will be appreciated, however, that more accurate rounding would require an additional bit for each value in the third set of values 5 (i.e. a '$2^8$' bit position in Table 3) and therefore additional resources.
Referring again to Figure 1, processing passes from step S3 to step S4 in which the third set of values 5 is processed to provide a first set of bit masks. The processing of step S4 is described in more detail with reference to the flowchart of Figure 3 and the Figure 2a. In Figure 3, at step 401 the third set of values 5 is transposed by transposition module 6 to provide a first nineteen word by sixty-four bit matrix 7. By way of example, Table 4 below illustrates the transposition of the Table 3 to provide an eight word by sixteen-bit matrix.

Table 4

| 0 | 0 | 0 | 0 | 1 | 0 | 1 | 0 | 1 | 0 | 0 | 0 | 0 | 0 | 0 | 1 |
|---|---|---|---|---|---|---|---|---|---|---|---|---|---|---|---|
| 0 | 0 | 0 | 0 | 0 | 0 | 0 | 0 | 0 | 0 | 0 | 1 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |

It will be appreciated that transposition may be performed without the use of additional hardware resources and without introducing additional latency. For example, the values may simply be read from the set of values 5 as though they had been transposed.

Referring again to Figure 3, processing passes to step S402 in which each of the nineteen sixty-four bit words of the matrix 7 are passed, in parallel, to a second priority encoder 8 arranged to set only the most significant set bit of each word in a second nineteen by sixty-four bit matrix 9. By way of example, Table 5 illustrates the processing of the matrix of Table 4 by the second priority encoder 8.

Table 5

| 0 | 0 | 0 | 0 | 1 | 0 | 0 | 0 | 0 | 0 | 0 | 0 | 0 | 0 | 0 | 0 |
|---|---|---|---|---|---|---|---|---|---|---|---|---|---|---|---|
| 0 | 0 | 0 | 0 | 0 | 0 | 0 | 0 | 0 | 0 | 0 | 1 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |

Processing then passes to step S403 at which a third nineteen-word by sixty-four-bit matrix 10 is generated. Only the second most significant set bit of each of the nineteen words of the matrix 7 is set in each corresponding word of the third matrix 10. In more detail, both the matrix 7 and the matrix 9 are passed to a first subtractor 11 arranged to subtract the matrix 9 from the matrix 7 providing a first subtracted matrix 12. The first subtracted matrix 12 is passed to a third priority encoder 13 arranged to provide the third matrix 10. By way of example, Table 6 below illustrates the processing of the Tables 4 and 5 by the first subtractor 11 and the third priority encoder 13.

Table 6

| 0 | 0 | 0 | 0 | 0 | 0 | 1 | 0 | 0 | 0 | 0 | 0 | 0 | 0 | 0 | 0 |
|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |

Processing passes from step S403 to step S404 at which a fourth nineteen-word by sixty-four-bit matrix 14 is generated. In particular, a second subtractor 15 is arranged to subtract the third matrix 10 from the first subtracted matrix 12 to provide a second subtracted matrix 16. The second subtracted matrix 16 is passed to a fourth priority encoder 17 arranged to provide the fourth matrix 14. By way of example, Table 7 below illustrates the processing of the Tables 5 and 6 by the second subtractor 15 and the fourth priority encoder 17.

Table 7

| 0 | 0 | 0 | 0 | 0 | 0 | 0 | 0 | 1 | 0 | 0 | 0 | 0 | 0 | 0 | 0 |
|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |

Processing passes from step S404 to step S405 at which a fifth nineteen-word by sixty-four-bit matrix 18 is generated. A third subtractor 19 is arranged to subtract the fourth matrix 14 from the second subtracted matrix 16 and to pass the resulting subtracted matrix to a fifth priority encoder 20 arranged to provide the fifth matrix 18. By way of example, Table 8 below illustrates the result of the processing of the Tables 6 and 7 by the third subtractor 19 and the fifth priority encoder 20.

Table 8

| 0 | 0 | 0 | 0 | 0 | 0 | 0 | 0 | 0 | 0 | 0 | 0 | 0 | 0 | 0 | 1 |
|---|---|---|---|---|---|---|---|---|---|---|---|---|---|---|---|
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 0 |

It will be appreciated that while shown as separate components above for ease of explanation, where implemented, for example in an FPGA, each pass of subtraction and priority encoding may be performed by the same logic block of the FPGA.

Each word of each matrix 9, 10, 14 and 18 is a sixty-four-bit bit mask having either a single, or no set bit. The processing of Figure 3 therefore provides four sets of nineteen sixty-four-bit masks. The position of a set bit within each mask indexes a location of a word in the second set of values 3 (i.e. the peak values). In particular, the position of a set bit in the first word of each matrix 9, 10, 14, 18 indexes a location of a word having a set bit at the most significant bit in the second set of values 3, which is taken to be one of the largest values in the first set of values 1. For example, with reference to Table 4 above, the set bit in the fifth column of the first row indicates the magnitude value '255' in the Table 1.

Referring again to Figure 1, processing passes from step S4 to step S5 at which each of the sixty-four-bit masks generated at step S4 is converted to a seven-bit binary representation by processing logic 21. One bit of the seven bits provides a "valid" bit which is set only if one of the sixty-four bits of a bit mask is set. As described above, each bit mask may contain at most a single set bit at one of sixty-four positions. As such, for bit masks in which a set bit is present, representing the position of the set bit for each of the sixty-four positions requires the six remaining bits of the seven-bits. In the presently described embodiment a mask without any set bit takes a value [0000000], a mask with a set bit at a first position ($2^0$) takes a value [1000000] and a mask with a set bit at a final position ($2^{63}$) takes a value [11111111]. It will be appreciated, however, that in other embodiments any suitable representation may be used. The processing logic 21 outputs four sets 22, 23, 24, 25 of nineteen seven-bit representations to re-mapping logic 26.

The re-mapping logic 26 re-maps the four sets 22, 23, 24, 25 into a single set of seventy-six six-bit position indexes (or 'first indexes') 27 and a single seventy-six-bit valid word 28. From the single set of first indexes 27 four are selected, those four indexing words in the second set of values 2 which are taken to correspond to four of the largest values in the first set of values 1. The re-mapping logic 26 is arranged to re-map the seventy-six first indexes 27 so as to correspond to the order of the words in the matrix 7. That is, the first index in the indexes 27 corresponds to the first word of the matrix 9, followed by the first words of the matrices 10, 14, 18 respectively; the fifth index of the indexes 27 is the second word of the matrix 9, followed by the second words of the matrices 10, 14, 18 respectively, etc.

Table 9 below shows the words of Tables 5 to 8 in an order corresponding to the order of first indexes as re-mapped by the re-mapping logic 26. In Table 9 below only the first five words are shown, as only these words would provide a first index having a set bit. The first four rows of Table 9 are made up of the first rows of each of Tables 5 to 8 respectively, while the fifth row of Table 9 is the second row of Table 5.

Table 9

| 0 | 0 | 0 | 0 | 1 | 0 | 0 | 0 | 0 | 0 | 0 | 0 | 0 | 0 | 0 | 0 |
|---|---|---|---|---|---|---|---|---|---|---|---|---|---|---|---|
| 0 | 0 | 0 | 0 | 0 | 0 | 1 | 0 | 0 | 0 | 0 | 0 | 0 | 0 | 0 | 0 |
| 0 | 0 | 0 | 0 | 0 | 0 | 0 | 0 | 1 | 0 | 0 | 0 | 0 | 0 | 0 | 0 |
| 0 | 0 | 0 | 0 | 0 | 0 | 0 | 0 | 0 | 0 | 0 | 0 | 0 | 0 | 0 | 1 |
| 0 | 0 | 0 | 0 | 0 | 0 | 0 | 0 | 0 | 0 | 0 | 1 | 0 | 0 | 0 | 0 |

The seventy-six bit valid word 28 is made up of each of the 'valid' bits of the seven-bit representations of the bit masks 9, 10, 14, 18 in the same order as the first indexes 27. That is, the valid bit for the first of the first indexes 27 occupies a first position of the valid word 28, the valid bit for the second of the first indexes 27 occupies a second position of the valid word 28, etc. The valid word 28 is passed to a sixth priority encoder 29 arranged to set only the most significant set bit of the seventy-six-bit valid word 28 in a second seventy-six bit word 30.

Both the seventy-six-bit valid word 28 and the second seventy-six bit word 30 are passed to a fourth subtractor 31 arranged to subtract the seventy-six-bit word 30 from the seventy-six-bit valid word 28 providing a third seventy-six-bit word 32. The seventy-six-bit word 32 is passed to an seventh priority encoder 33 arranged to set only the most significant bit of the third seventy-six-bit word 32 (i.e. the second most significant bit of the seventy-six-bit valid word 28) in a fourth seventy-six-bit word 34. Both the seventy-six-bit words 32 and 34 are passed to a fifth subtractor 35 arranged to subtract the seventy-six-bit word 34 from the seventy-six-bit word 32 providing a fifth seventy-six-bit word 36. The fifth seventy-six-bit word 36 is passed to an eighth priority encoder 37 arranged to set only the most significant bit of the seventy-six-bit word 36 (i.e. the third most significant bit of the seventy-six-bit valid word 28) in a sixth seventy-six-bit word 38. Both the seventy-six-bit words 36 and 38 are passed to a sixth subtractor 39 arranged to subtract the seventy-six-bit word 38 from the seventy-six-bit word 36 providing a seventh seventy-six-bit word 40. The seventy-six-bit word 40 is passed to a ninth priority encoder 41 arranged to set only the most significant bit of the seventy-six-bit word 40 (i.e. the fourth most significant bit of the seventy-six-bit valid word 28) in a eighth seventy-six-bit word 42.

The set bit position of each seventy-six bit words 30, 34, 38 and 42 indexes a respective one of the first indexes 27. Referring again to Figure 1, processing passes from step S5 to step S6 in which the four seventy-six bit words 30, 34, 38 and 42 are converted to binary representations 44 (or "second indexes") by a conversion module 45. In particular, the four seventy-six bit words 30, 34, 38 and 42 may together be considered to comprise seventy-six four-bit words, each four-bit word containing at most a single set bit, the single set bit being at one of the four bit positions. To obtain the second indexes 44, these seventy-six four-bit words are converted into seventy-six three-bit words.

At step S7, the first indexes 27 are provided as inputs to a first multiplexor 46, with the binary representations 44 being used as a selector to select four of the first indexes 27 as outputs 47. The four outputs 47 correspond to the four first indexes 27 which index the four approximately largest values in the initial set of values 1. The four outputs 47 of the first multiplexor 46 therefore provide a set of third indexes that are used, at step S8, as selectors for a second multiplexor 48 to which is provided the first set of sixty-four nineteen-bit unsigned binary values 1. At step S8, the second multiplexor 48 therefore outputs four amplitude values 49 from the first set of values 1. The four amplitude values 49 are (approximately) the four largest amplitude values in the first set 1.

The four outputs 47 of the first multiplexor 46 may also be output. In the present embodiment (that is, where the first set of values 1 are the result of a sixty-four point FFT sampling the RF spectrum, as described above), the outputs of the first multiplexor 46 provide indexes that relate to the spectral frequency of the initial set of values 1.

In the embodiment described above, the system 100 is utilised to select four of the approximately largest values from a set of sixty-four nineteen-bit values. It will be readily apparent to the skilled person from the teaching herein, however, that the present invention is not limited to the example embodiment described. For example, in other embodiments, the techniques described above may be used to determine more or fewer than four values. Similarly, the techniques described above may be applied to input sets larger or smaller than sixty-four, or to input values larger or smaller than nineteen bits.

The embodiments described above may be performed by a suitably programmed FPGA. It will be appreciated, however, that the methods described above may be performed by any suitable processing device, such as an ASIC or a general purpose computer.

It has been determined that a suitable FPGA (such as the Virtex 7 690T FPGA from Xilinx, Inc. San Jose, California, USA) programmed to perform the method described above is able to determine (approximately) the four largest of sixty-four nineteen-bit values within nine clock cycles at 320 MHz. Using the Virtex 7 690T FPGA, the number of clock cycles and FPGA resources required at 320 MHz is increased as a result of at least one critical path. It has been determined that the number of required clock cycles may therefore be reduced with a reduction in the clock frequency.

In contrast to the embodiments described above, a prior art FPGA bitonic sorting algorithm is able to determine the four largest of sixty-four nineteen-bit values in thirteen clock cycles at 243 MHz. While the bitonic sorting algorithm provides the actual four largest values rather than the approximation provided by the above described embodiments, the approximation provided by the above described embodiments provides sufficient accuracy for many applications, including the processing of ECM signals where the decreased latency is of greater importance.

Further, the techniques described above have broad applicability beyond the processing of ECM data. Indeed, the techniques described herein may be used irrespective of the underlying data to which those techniques are applied. As such, any application or system which utilises a determination of For example, the ability to efficiently, and with low latency, approximately determine a desired number of largest values from a set of values may be used in many fields, including, for example, high frequency trading.

Further modifications and applications of the present invention will be readily apparent to the appropriately skilled person from the teaching herein, without departing from the scope of the appended claims.

**Claims**

1. A method for processing electrical signals, comprising:

    at a receiver receiving a plurality of electrical signals, each electrical signal having an associated magnitude value; at a processor:

        generating from the magnitude values a set of peak values, the set of peak values indicating peaks in the plurality of electronic signals;
        generating from the peak values a plurality of first indexes, the first indexes indexing respective ones of the peak values;
        generating from the peak values at least one second index, the at least one second index indexing at least one of the first indexes;
        selecting from the plurality of first indexes at least one third index based on the at least on second index; and selecting at least one of the electrical signals based on the at least one third index.

2. The method of claim 1, wherein receiving a plurality of electrical signals comprises receiving N electrical signals and the method further comprises, at the processor:

        processing each of the N electrical signals to generate a first set of N magnitude values, each of said N magnitude values having M bits; and
        wherein generating the set of peak values optionally comprises processing the first set of N magnitude values to generate a corresponding set of N peak values each of the N peak values having M bits; wherein each of the N peak values corresponding to a non-peak value in the first set of N magnitude values has a value of zero.

3. The method of claim 2, wherein processing the first set of peak values to generate the plurality of first indexes comprises transposing a first N by M matrix based on the set of peak values to generate a transposed matrix of M values each of the M values having N bits; and
    wherein the method optionally further comprises generating said first matrix by generating an N by M matrix in which for each row only a bit corresponding to a most significant set bit of a corresponding peak value is set and wherein generating said first matrix optionally comprises providing said first set of peak values to a first priority encoder module.

4. The method of any of claims 3, wherein processing the set of peak values to generate the plurality of first indexes comprises generating at least one bit mask for each of the M values in the transposed matrix; and
wherein generating at least one bit mask for a particular one of the M values optionally comprises generating a first bit mask of N bits having at most a single set bit at the position of the most significant set bit of the particular one of the M values.

5. The method of claim 4, wherein generating at least one bit mask for a particular one of the M values comprises generating a plurality of bit masks for the particular one of the M values, each respective one of the plurality of bit masks comprising at most a single set bit at a position of a most significant set bit not set in an existing one of the plurality of bit masks associated with the particular one of the M values; and
wherein generating a plurality of bit masks optionally comprises generating four bit masks, each respective bit mask having at most a single set bit at positions of the four most significant set bits of the particular one of the M values respectively.

6. The method of claim 4 to 5, wherein generating at least one bit mask for a particular one of the M values comprises providing said particular one of the M values to a second priority encoder module to generate a first bit mask;
wherein generating a plurality of bit masks optionally further comprises subtracting said first bit mask from said particular one of the M values to generate a first intermediate value and providing said first intermediate value to a third priority encoder module to generate a second bit mask; and
wherein processing the peak values to generate the plurality of first indexes optionally comprises generating a first index for each of the bit masks having a set bit, wherein for each bit mask having a set bit a corresponding first index comprises position bits indicating a position of the set bit within the bit mask.

7. The method of any one of claims 4 to 6, wherein processing the peak values to generate the at least one second index comprises generating a valid word, the valid word comprising a respective bit for each of the bit masks;
wherein for each of the bit masks a corresponding bit of the valid word is set if the bit mask comprises a set bit and is not set if the bit mask does not comprise a set bit; and
wherein processing the plurality of peak values to generate at least one second index optionally comprises processing the valid word to generate the at least one second index, the second index comprising at most a single set bit at a position corresponding to a position of a most significant set bit in the valid word.

8. The method of claim 7,
wherein processing the peak values to generate at least one second index comprises generating a plurality of second indexes, each second index comprising at most a single set bit at a position of a most significant set bit of the valid word that is not set in another of the second indexes; and/or
wherein processing the plurality of peak values to generate at least one second index comprises generating four second indexes, each second index comprising at most a single set bit at a position corresponding to a position of one of four most significant set bits of the valid word respectively.

9. The method of any preceding claim, wherein selecting from the plurality of first indexes at least one third index based on the at least one second index comprises providing the plurality of first indexes as inputs to a first multiplexer and selecting at least one of the first indexes based on the at least one second index.

10. The method of any preceding claim,
wherein selecting at least one of the electrical signals comprises providing the corresponding magnitude values as inputs to a second multiplexer and selecting at least one of the electrical signals based on the at least one third index; and/or
wherein the received electrical signals comprise sixty-four electrical signals and where each associated magnitude value comprises a nineteen-bit value; and/or
wherein selecting at least one of the received electrical signals comprises selecting four of the received electrical signals.

11. The method of any preceding claim, further comprising receiving the set of electrical signals from an ECM apparatus.

12. The method of any preceding claim, further comprising providing an indication of the selected at least one electrical signal to an ECM apparatus.

13. The method of claim 12, further comprising, at the ECM apparatus:

selecting a target based upon the indication of the selected at least one electrical signal; and
targeting at least one detection counter-measure at the target.

14. An FPGA programmed to carry out a method according to any preceding claim.

15. An apparatus for processing electrical signals, comprising:

a receiver for receiving a plurality of electrical signals, each electrical signal having an associated magnitude value; and
a processor arranged to:

generate from the magnitude values a set of peak values, the set of peak values indicating peaks in the plurality of electronic signals;
generate from the peak values a plurality of first indexes, the first indexes indexing respective ones of the peak values;
generate from the peak values at least one second index, the at least one second index indexing at least one of the first indexes;
select from the plurality of first indexes at least one third index based on the at least on second index; and
select at least one of the electrical signals based on the at least one third index.

Fig. 1

Fig. 2a

Fig. 2b

| | |
|---|---|
| Transposition | 401 |

↓

| | |
|---|---|
| Extract MSB | 402 |

↓

| | |
|---|---|
| Extract MSB-1 | 403 |

↓

| | |
|---|---|
| Extract MSB-2 | 404 |

↓

| | |
|---|---|
| Extract MSB-3 | 405 |

Fig. 3

**EP 2 919 032 A1**

Europäisches
Patentamt
European
Patent Office
Office européen
des brevets

**EUROPEAN SEARCH REPORT**

Application Number

EP 15 15 5208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y<br>A | US 2007/252973 A1 (GULDEVALL ULF [SE])<br>1 November 2007 (2007-11-01)<br>* abstract; figures 1-4 *<br>* paragraphs [0038] - [0048], [0067] - [0073] * | 1,2,9,<br>10,14,15<br>11-13<br>3-8 | INV.<br>G01S7/38<br>G01S7/02<br>G06F7/24 |
| Y<br>A | US 5 963 164 A (TSUI JAMES B Y [US] ET AL)<br>5 October 1999 (1999-10-05)<br>* abstract; figures 1,2,6,11,12 *<br>* column 3, line 50 - column 4, line 26 *<br>* column 7, line 12 - line 26 *<br>* column 8, line 10 - line 36 *<br>* column 8, line 43 - column 9, line 63 * | 11-13<br>3-8 | |
| A | US 6 021 131 A (EVEN SHIMON [US])<br>1 February 2000 (2000-02-01)<br>* abstract; figures 2-3 *<br>* column 1, line 24 - column 2, line 3 *<br>* column 4, line 63 - column 5, line 39 * | 1-15 | |
| A | US 2012/086591 A1 (SURYONO YANTO [JP])<br>12 April 2012 (2012-04-12)<br>* abstract; figures 3-7 *<br>* paragraphs [0029] - [0043] * | 1-14 | TECHNICAL FIELDS SEARCHED (IPC)<br><br>G01S<br>G06F |

The present search report has been drawn up for all claims

| Place of search | Date of completion of the search | Examiner |
|---|---|---|
| Munich | 15 July 2015 | Mercier, Francois |

EPO FORM 1503 03.82 (P04C01)

**ANNEX TO THE EUROPEAN SEARCH REPORT
ON EUROPEAN PATENT APPLICATION NO.** EP 15 15 5208

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2015

| Patent document cited in search report | | Publication date | Patent family member(s) | | Publication date |
|---|---|---|---|---|---|
| US 2007252973 | A1 | 01-11-2007 | CN<br>EP<br>JP<br>SE<br>US<br>WO | 1867833 A<br>1664805 A1<br>2007502409 A<br>0302205 A<br>2007252973 A1<br>2005017540 A1 | 22-11-2006<br>07-06-2006<br>08-02-2007<br>14-02-2005<br>01-11-2007<br>24-02-2005 |
| US 5963164 | A | 05-10-1999 | NONE | | |
| US 6021131 | A | 01-02-2000 | NONE | | |
| US 2012086591 | A1 | 12-04-2012 | NONE | | |

EPO FORM P0459

For more details about this annex : see Official Journal of the European Patent Office, No. 12/82